# EUROPÄISCHE PATENTSCHRIFT

(11) **EP 2 373 709 B1**
(45) Veröffentlichungstag und Bekanntmachung des Hinweises auf die Patenterteilung: **29.05.2019**
(21) Anmeldenummer: 09760845.9
(22) Anmeldetag: 25.11.2009
(51) Int. Cl.: C08F 265/00, C08F 267/00, C08F 283/06, C08F 290/00, C08F 290/06, C08F 290/14, C08L 51/00, C08F 2/16

(54) **SEMIKONTINUIERLICH BETRIEBENES VERFAHREN ZUR HERSTELLUNG VON COPOLYMEREN**
SEMI-CONTINUOUS METHOD FOR PRODUCING COPOLYMERS
PROCÉDÉ SEMI-CONTINU POUR LA PRODUCTION DE COPOLYMÈRES

(30) Priorität: 08.12.2008 EP 08170979
(43) Veröffentlichungstag der Anmeldung: 12.10.2011
(73) Patentinhaber: Construction Research & Technology GmbH, 83308 Trostberg (DE)
(72) Erfinder: DORFNER, Reinhard, 84558 Kirchweidach (DE); LORENZ, Klaus, 84539 Zangberg (DE); WAGNER, Petra, 83308 Trostberg (DE); SCHOLZ, Christian, 84518 Wald an der Alz (DE)
(74) Vertreter: BASF IP Association
(86) Internationale Anmeldenummer: PCT/EP2009/065790
(87) Internationale Veröffentlichungsnummer: WO 2010/066577

(56) Entgegenhaltungen:
- US-A1- 2003 162 879
- US-A1- 2003 199 616
- US-A1- 2007 161 724
- US-A1- 2007 181 039

## Beschreibung

Die vorliegende Erfindung betrifft ein Verfahren zur Herstellung eines Copolymers, das Copolymer sowie die Verwendung des Copolymers.

Es ist bekannt, dass man wässrige Aufschlämmungen von pulverförmigen anorganischen oder organischen Substanzen, wie Tonen, Silikatmehl, Kreide, Ruß, Gesteinsmehl und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Derartige Zusatzmittel sind in der Lage, Feststoffagglomerate aufzubrechen, die gebildeten Teilchen zu dispergieren und auf diese Weise die Verarbeitbarkeit zu verbessern. Dieser Effekt wird insbesondere auch gezielt bei der Herstellung von Baustoffmischungen, die hydraulische Bindemittel wie Zement, Kalk, Gips oder Anhydrit enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozess notwendig wäre. Der durch das überschüssige, später verdunstende Wasser gebildete Hohlraumanteil im Betonkörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im Allgemeinen als Wasserreduktions- oder Fließmittel bezeichnet werden. Als derartige Mittel werden in der Praxis insbesondere Copolymere eingesetzt, welche durch radikalische Copolymerisation von Säuremonomeren mit Polyethermakromonomeren hergestellt werden.

In der Praxis erfolgt die Copolymerisation meist in der Semi-Batch-Fahrweise. Die WO 2005/075529 beschreibt ein semikontinuierliches Herstellungsverfahren für besagte Copolymere, in welchem das Polyethermakromonomer vorgelegt wird und anschließend das Säuremonomer über die Zeit der Vorlage zudosiert wird. Obwohl das beschriebene Verfahren bereits kostengünstig ist und als Verfahrensprodukt Hochleistungsfließmittel erhalten werden, besteht weiterhin ein Bestreben, die Wirtschaftlichkeit des Verfahrens sowie Qualität des Verfahrensprodukts noch weiter zu verbessern.

Die der vorliegenden Erfindung zugrunde liegende Aufgabe ist es somit, ein wirtschaftliches Verfahren zur Herstellung von Copolymeren bereit zu stellen, welche als Dispergiermittel für hydraulische Bindemittel, speziell als Fließmittel, eine gute Performance zeigen.

Die Lösung dieser Aufgabe ist ein Verfahren zur Herstellung eines Copolymers in semikontinuierlicher Betriebsweise in einer Polymerisationsvorrichtung enthaltend einen mit einer Dosiereinrichtung verbundenen Polymerisationsreaktor, wobei Säuremonomer in der Dosiereinrichtung sowie Polyethermakromonomer und Wasser in dem Polymerisationsreaktor jeweils vorgelegt werden, Säuremonomer aus der Dosiereinrichtung über eine Säuremonomerdosierleitung in den Polymerisationsreaktor eindosiert wird, vor und/oder während der Eindosierung des Säuremonomers in den Polymerisationsreaktor radikalischer Polymerisationsinitiator in den Polymerisationsreaktor eingeleitet wird, so dass in dem Polymerisationsreaktor ein wässriges Medium entsteht, in welchem Säuremonomer und Polyethermakromonomer unter Bildung des Copolymers durch radikalische Polymerisation umgesetzt werden, das molare Verhältnis von insgesamt eingesetztem Säuremonomer zu insgesamt eingesetztem Polyethermakromonomer 20 : 1 bis 1 : 1 beträgt, dass molare Verhältnis von in den Polymerisationsreaktor vorgelegten Säuremonomer zu dem in den Polymerisationsreaktor eindosierten Säuremonomer 3 : 1 bis 1 : 10 beträgt, wobei während der radikalischen Polymerisation kontinuierlich eine Teilmenge des Copolymer enthaltenden wässrigen Mediums aus dem Polymerisationsreaktor über eine Reaktionsmischungsleitung ausgeleitet wird, welche über eine Mischeinrichtung mit der Säuremonomerdosierleitung verbunden ist, das ausgeleitete Copolymer enthaltende wässrige Medium in der Mischeinrichtung während der Dosierung des Säuremonomers mit dem Säuremonomer vermischt wird und nach dem Vermischen über die Säuremonomerdosierleitung in den Polymerisationsreaktor zurückgeführt wird.

Als Säuremonomer sollen radikalisch copolymerisierbare, mindestens eine Kohlenstoffdoppelbindung aufweisenden Monomere verstanden werden, welche mindestens eine Säurefunktion enthalten und im wässrigen Medium als Säure reagieren. Weiterhin sollen als Säuremonomer auch radikalisch copolymerisierbare, mindestens eine Kohlenstoffdoppelbindung aufweisende Monomere verstanden werden, welche aufgrund von Hydrolysereaktion im wässrigen Medium mindestens eine Säurefunktion ausbilden und im wässrigen Medium als Säure reagieren (Beispiel: Maleinsäureanhydrid oder basisch hydrolysierbare Ester wie Ethylacrylat). Polyethermakromonomere im Sinne der vorliegenden Erfindung sind radikalisch copolymerisierbare Verbindungen mit mindestens einer Kohlenstoffdoppelbindung, welche mindestens zwei Ether-Sauerstoffatome aufweisen und zwar mit der Maßgabe, dass die in dem Copolymer enthaltenen Polyethermakromonomerstruktureinheiten Seitenketten aufweisen, die mindestens zwei Ether-Sauerstoffatome enthalten.

Das erfindungsgemäße Verfahren gewährleistet eine effektive Einmischung des Säuremonomers. Aufgrund der guten Durchmischung resultiert eine höhere Einheitlichkeit des hergestellten Copolymers, wodurch dessen Qualität als Dispergiermittel bzw. Fließmittel verbessert wird. Weiterhin zeigen sich weniger unerwünschte Hydrolysereaktionen an den Polyetherseitenketten des Polyethermakromonomere. Das erfindungsgemäße Verfahren ist aus verfahrenstechnischer Sicht relativ einfach praktizierbar und besonders wirtschaftlich.

Meist wird als radikalischer Polymerisationsinitiator ein Redoxinitiatorsystem eingesetzt, wobei die Temperatur des Copolymer enthaltenden wässrigen Mediums in dem Polymerisationsreaktor während der radikalischen Polymerisation 5 bis 40 °C beträgt und wobei mittels einer mit der Reaktionsmischungsleitung verbundenen Kühleinrichtung das aus dem Polymerisationsreaktor ausgeleitete Copolymer enthaltende wässrige Medium um mindestens 3 °C gekühlt wird.

Dieser Kühlschritt ist aus verfahrenstechnischer Sicht besonders praktisch und wirkt sich ebenfalls positiv auf die Qualität des Copolymerprodukts aus.

In der Regel wird radikalischer Polymerisationsinitiator während der radikalischen Polymerisation in die Reaktionsmischungsleitung eingeleitet.

Bevorzugt ist die Mischeinrichtung der Kühleinrichtung nachgeschaltet.

Meist liegt die Mischeinrichtung als statischer Mischer vor.

Häufig liegt das Säuremonomer in Form einer wässrigen Lösung in der Dosiereinrichtung vor.

Meist bildet in dem Polymerisationsreaktor das Copolymer enthaltende wässrige Medium mit darüber befindlichem Gas eine Grenzfläche aus, wobei das Säuremonomer oberhalb dieser Grenzfläche in den Polymerisationsreaktor eindosiert wird.

Meist wird durch die Umsetzung des Säuremonomers eine Struktureinheit im Copolymer erzeugt, die gemäß einer der allgemeinen Formeln (Ia), (Ib), (Ic) und/oder (Id) ist 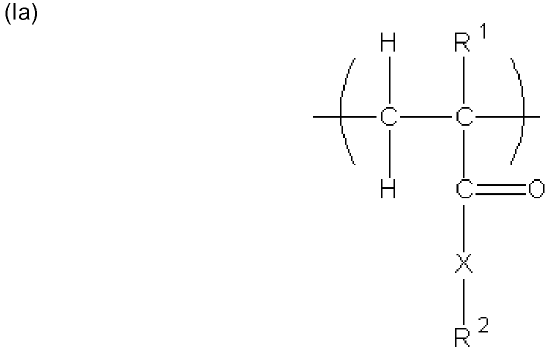 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 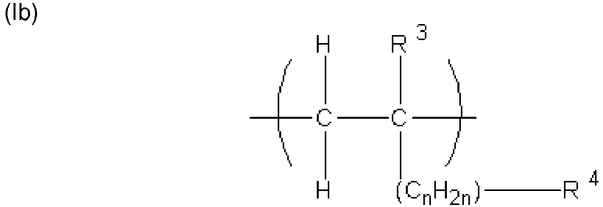
mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 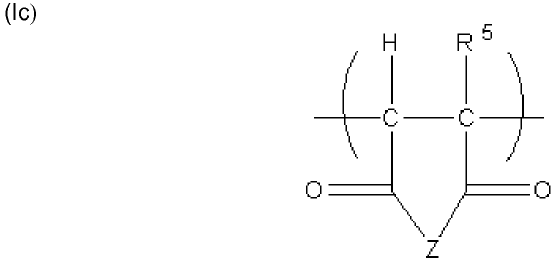
mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 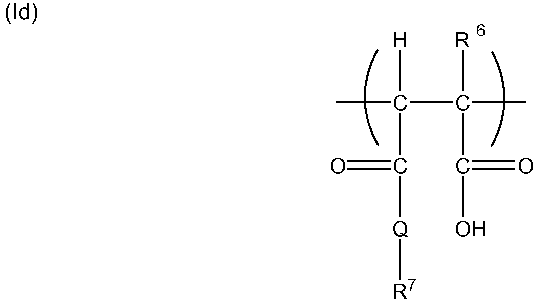
mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, vorzugsweise n = 1, 2, 3 oder 4, (CₙH₂ₙ)-OH mit n = 0, 1, 2, 3 oder 4, vorzugsweise n = 1, 2, 3 oder 4; (CₙH₂ₙ)-PO₃H₂ mit n = 0, 1, 2, 3 oder 4, vorzugsweise n = 1, 2, 3 oder 4, (CₙH₂ₙ)-OPO₃H₂ mit n= 0, 1, 2, 3 oder 4, vorzugsweise n = 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α} -R⁹ mit m = 0, 1, 2, 3 oder 4, vorzugsweise m = 1, 2, 3 oder 4, e = 0, 1, 2, 3 oder 4, vorzugsweise e = 1, 2, 3 oder 4, A' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

Normalerweise wird als Säuremonomer Methacrylsäure, Acrylsäure, Maleinsäure, Maleinsäureanhydrid, ein Halbester der Maleinsäure oder eine Mischung aus mehreren dieser Komponenten eingesetzt.

Je nach pH-Wert können die Säuremonomerstruktureinheiten auch in deprotonierter Form als Salz vorliegen, wobei dann als Gegenionen Na⁺, K⁺ sowie Ca²⁺ typisch sind.

Meist wird durch die Umsetzung des Polyethermakromonomers eine Struktureinheit im Copolymer erzeugt, die gemäß einer der allgemeinen Formeln (IIa), (IIb) und/oder (IIc) ist 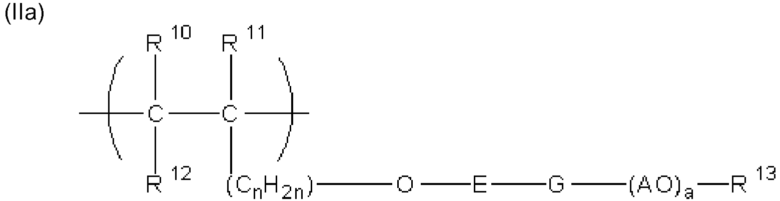 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylengruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃; 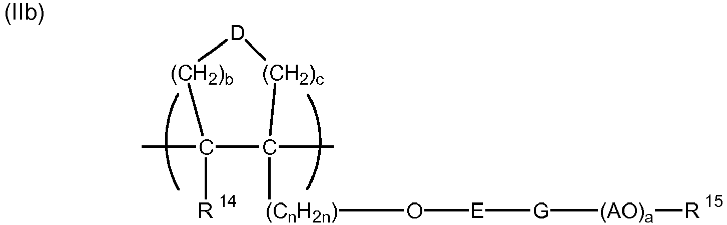
mit
R¹⁴ gleich oder verschieden sowie repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylengruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 2 bis 350;
D gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn D NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 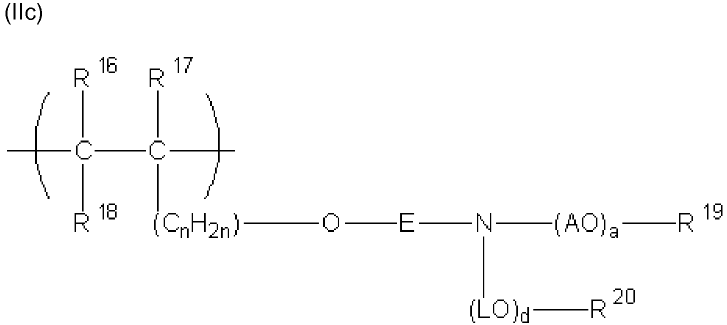
mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, vorzugsweise C₂ - C₆ Alkylengruppe, eine Cyclohexylengruppe, CH₂-C₆H₁₀ und/oder ortho, meta oder para substituiert vorliegendes C₆H₄;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆H₅);
a gleich oder verschieden sowie repräsentiert durch eine ganze Zahl von 2 bis 350;
d gleich oder verschieden sowie repräsentiert durch eine ganze Zahl von 1 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe.

Typischerweise wird als Polyethermakromonomer alkoxyliertes Isoprenol und/oder alkoxylierter Hydroxybutylvinylether und/oder alkoxylierter (Meth)allylalkohol und/oder vinyliertes Methylpolyalkylenglykol mit bevorzugt jeweils einer arithmetisch mittleren Zahl an Oxyalkylengruppen von 4 bis 340 eingesetzt.

Die Alkoxyeinheiten der Polyethermakromonomere liegen in der Regel als Ethoxygruppen oder als Gemisch aus Ethoxy- und Propoxygruppen vor (diese Polyethermakromonomere sind erhältlich aus der Ethoxylierung bzw. Propoxylierung der entsprechenden Monomeralkohole.

Meist wird als radikalischer Polymerisationsinitiator ein Redoxinitiatorsystem eingesetzt wird, welches H₂O₂, FeSO₄ sowie ein Reduktionsmittel enthält.

Bevorzugt erfolgt die Polymerisation bei einem pH-Wert von 3 bis 7, besonders bevorzugt 4 bis 6.

Bevorzugt ist ein Wärmeaustauscher vor dem statischen Mischer an der Reaktionsmischungsleitung installiert um eine effektive Vorkühlung des wässrigen Mediums vor dem Zutritt des Säuremonomers zu erreichen. Bevorzugt wird eine Temperatur von 0 bis 20°C eingestellt. Die niedrige Temperatur trägt auch wesentlich zur Verminderung der Hydrolyse des Makronomer im oben genannten pH - Bereich der Makromonomerlösung bei.

Bevorzugt liegt das wässrige Medium in Form einer wässrigen Lösung vor.

Meist liegen insgesamt mindestens 45 Mol-%, bevorzugt mindestens 80 Mol-% aller Struktureinheiten des Copolymers als einpolymerisiertes Säuremonomer und einpolymerisiertes Polyethermakromonomer vor.

Häufig wird ein Kettenregler, welcher bevorzugt in gelöster Form vorliegt, in den Polymerisationsreaktor eingeleitet.

Die Erfindung betrifft außerdem ein Copolymer, welches gemäß dem vorstehend beschriebenen Verfahren herstellbar ist.

Weiterhin betrifft die Erfindung die Verwendung dieses Copolymers als Dispergiermittel für hydraulische Bindemittel und/ oder für latenthydraulische Bindemittel. Das Copolymer kann beispielsweise auch (insbesondere in entwässerter Form) als Additiv für die Zementproduktion (Mahlhilfe und "Wasserreduzierer" für reine Portlandzemente bzw. Kompositzemente) eingesetzt werden.

Nachstehend soll eine typische Ausführungsform der Erfindung anhand der Zeichnung näher erläutert werden.

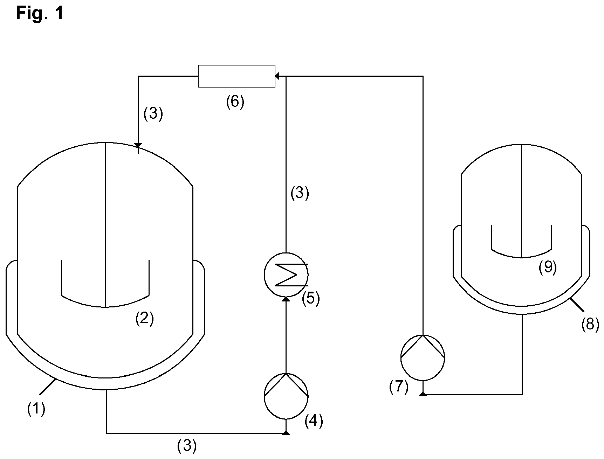

Die Zeichnung zeigt in Figur 1 einen vereinfachten schematischen Aufbau einer großtechnischen Apparatur, in welcher das erfindungsgemäße Verfahren durchgeführt werden kann. Die Figur 1 zeigt einen Polymerisationsreaktor (1) mit Rührwerk (2) und einer Reaktionsmischungsleitung (3). An der Reaktionsmischungsleitung (3) sind nacheinander eine Pumpe (4) zur Umwälzung, ein Wärmeaustauscher (5) zur Kühlung und ein Statischer Mischer (6) zur effektiven Vermischung des aus dem Reaktor ausgeleiteten wässrigen Mediums und des Säuremonomers installiert. Eine Dosiereinrichtung (8), bevorzugt enthaltend das Säuremonomer, welche ebenfalls mit einem Rührwerk (9) ausgestattet ist, ist über eine Dosierleitung mit zwischengeschalteter Pumpe (7) mit der Reaktionsmischungsleitung (3) verbunden.

Die Durchmischung von Säuremonomerlösung mit Polyethermakromonomer erfolgt bereits in der Kreislaufleitung mit Hilfe des Statischen Mischers. Folgende Vorteile sind zu verzeichnen:
- Die Mischzeit zum Erreichen eines Mischungsgrades nahe 1 wird erheblich verkürzt, dadurch ist es möglich einheitlichere und damit effektivere Produkte zu erhalten.
- Die Reaktionsmischung wird effektiv gekühlt, sowohl im Reaktor als auch bei der Zudosierung des Säuremonomers. Dies hat den Vorteil, dass die Wärme effektiv abgeführt werden kann und somit Hydrolyse von Makronomer verhindert oder vermindert werden kann. Bei der Zudosierung des Säuremonomers ist dies insbesondere vorteilhaft, weil effektiv vorgekühltes, wässriges Medium (verlässt den Wärmeaustauscher) typischerweise eine wesentlich tiefere Temperatur hat, als in dem Polymerisationsreaktor herrscht. Im Polymerisationsreaktor wird Reaktionswärme freigesetzt und damit wird zwangsläufig eine höhere Temperatur herrschen. Eine niedrige Temperatur wiederum trägt wesentlich dazu bei eine Hydrolyse des Polyethermakromonomers zu verhindern oder zu vermindern.
- Der Statische Mischer ist zur Demontage und Reinigung leicht zugänglich, im Gegensatz zu einem Mischer oder Dosierlanzen, die in einem Polymerisationsreaktor eingebaut sind und in bestimmten Zeitabständen gereinigt oder gewartet werden müssen. Das Einsteigen von Mitarbeitern in Behälter stellt in der chemischen Industrie eine große Gefahrenquelle dar und führt zwangsläufig zu einer längeren Unterbrechung der Produktion.
- Bezüglich der Verteilung der Struktureinheiten im Copolymer resultiert eine verhältnismäßig hohe Einheitlichkeit (trotz unterschiedlicher Reaktivität von Polyethermakromonomer und Säuremonomer).
- Abänderungen des Verfahrens sind recht leicht durchführbar, da das Einmischverhalten des Säuremonomers praktisch ausschließlich von der Beschaffenheit des Statischen Mischers und kaum von der Geometrie des Reaktors bzw. der Mischwirkung des Rührwerkes abhängt. Ebenso verhält es sich mit der Übertragung des Verfahrens in einen Reaktor mit abweichenden geometrischen Verhältnissen.
- Der Anteil an entstehendem, unerwünschtem Hydrolysenebenprodukt des Polyethermakromonomers ist verhältnismäßig gering.

### Beispiele

Die Erfindung soll anhand von Synthesebeispielen verdeutlicht werden.

### Polymer 1

In einem Reaktor aus Edelstahl - aufgebaut analog Fig.1 , zusätzlich mit einer Zulaufeinrichtungen für unten aufgeführte Lösung B, werden 3360 kg Wasser mit einer Temperatur von 15,0 °C und 3480 kg in Schmelze mit einer Temperatur von 80 °C vorliegender Vinyloxybutylpolyethylenglykol (Anlagerungsprodukt aus 129 Mol Ethylenoxid an 4-Hydroxybutyl-monovinylether) vorgelegt. Es ergibt sich eine Mischtemperatur von 42,0 °C. Die Pumpe (4) wird gestartet, der Reaktorinhalt wird durch Umpumpen durch die Kreislaufleitung (3) über den Wärmetauscher (5) auf eine Temperatur von 25,0 °C gekühlt, die Umlauftemperatur des Kühlmediums beträgt hierbei konstant 10,0 °C.

In einem separaten Zulaufgefäß werden 176 kg Acrylsäure und 34,1 kg Maleinsäureanhydrid mit 610,7 kg deionisiertem Wasser homogen vermischt und unter Kühlen 78,3 kg einer 40 %igen Kaliumhydroxydlösung zugegeben (Lösung A).

Parallel wird in einem Anrührbehältnis eine zweite Lösung bestehend aus 10,8 kg Brüggolit® FF6 (Handelsprodukt der Firma Brüggemann Chemicals GmbH) und 170,0 kg deionisiertem Wasser hergestellt (Lösung B).

Nach erfolgtem Abkühlen der Vorlagemischung auf 25,0 °C werden 39,0 kg 20 %ige Natronlauge in den Reaktor gegeben. Anschließend wird die Pumpe (7) gestartet und 425,00 Liter der Lösung A über den statischen Mischer (6) in die wässrige Makromonomerlösung eingetragen. Pumpe (4) und Wärmetauscher (5) sind dabei weiterhin hin Betrieb. Danach werden 2,1 kg 3-Mercaptopropionsäure zur Vorlage gegeben. Anschließend werden zur verbleibenden Lösung A 18,8 kg 3-Mercaptopropionsäure zugegeben, danach 0,12 kg Eisen-II-sulfat-Heptahydrat sowie 20,0 kg Wasserstoffperoxid (30 % in Wasser) zum Vorlagegemisch dosiert und die Reaktion gestartet. Zeitgleich wird mit der Zugabe von Lösung A und Lösung B zur gerührten Vorlage begonnen. Dabei wird fortlaufend Lösung mittels Pumpe (4) durch die Kreislaufleitung (3) gefördert.

Die Dosierraten der Lösung A können folgenden Dosierprofils entnommen werden. Lösung B wird mit konstanter Dosierrate bis zum Ende der Dosierung von Lösung A in den Reaktor dosiert.

| t (min) | 0 | 2 | 4 | 8 | 10 | 12 | 14 | 16 | 18 | 22 | 26 | 30 |
|---|---|---|---|---|---|---|---|---|---|---|---|---|
| Lösung A (l/h) | 1290 | 1440 | 1490 | 1440 | 1290 | 1060 | 870 | 690 | 540 | 330 | 210 | 0 |

Nach Beendigung der Reaktion wird die erhaltene Polymerlösung mit 20 %iger Natriumhydroxid-Lösung auf einen pH-Wert von 6,5 eingestellt.
Man erhält eine leicht gelbliche Polymerlösung, das Copolymer weist ein gewichtsmittleres Molekulargewicht von 53000 g/Mol auf. Die Polymere (Polymer 1 und Polymer 2) wurden mittels Größenausschlusschromatographie auf mittlere Molmasse und Umsatz analysiert (Säulenkombinationen: OH-Pak SB-G, OH-Pak SB 804 HQ und OH-Pak SB 802.5 HQ von Shodex, Japan; Elutionsmittel: 80 Vol.-% wässrige Lösung von HCO₂NH₄ (0,05 mol/l) und 20 Vol.-% Acetonitril; Injektionsvolumen 100 µl; Durchflussrate 0,5 ml/min). Die Kalibrierung zur Bestimmung der mittleren Molmasse erfolgte mit linearen Poly(ethylenoxid)- und Polyethylenglykol-Standards. Als Maß für den Umsatz wird der Peak des Copolymers auf eine relative Höhe von 1 normiert und die Höhe des Peaks des nichtumgesetzten Makromonomer/PEG-haltigen Oligomers als Maß für den Restmonomerengehalt verwendet.

### Polymer 2 (Vergleichsbeispiel)

Polymer 2 wird analog zu Polymer 1 synthetisiert, wobei die Dosierung der Lösung A in den Reaktor sowohl vor der Polymerisation als auch während der Polymerisationsreaktion unter Spiegel in den Reaktor erfolgt.
Nach analoger Herstellweise zu Polymer 1 erhält man eine leicht gelbliche Polymerlösung, das Copolymer weist ein ein gewichtsmittleres Molekulargewicht von 52000 g/mol auf.

Im Folgenden sollen die anwendungstechnischen Daten der Polymere näher beleuchtet werden:
400 kg Portlandzement (CEM I 42,5 R) wurden mit runden Zuschlägen, zusammengesetzt entsprechend der Fuller-Sieblinie mit einem Größtkorn von 16 mm und 140 kg Wasser, welches die erfindungsgemäßen Produkte in gelöster Form enthielt, angerührt. Unmittelbar nach der Herstellung der Betonmischung erfolgten die Bestimmung der Frischbetoneigenschaften sowie deren zeitliche Veränderung über einen Zeitraum von 30 Minuten.

Die Ergebnisse der Prüfung zeigt unten stehende Tabelle.

| Fließmittel | Dosierung¹ | Ausbreitmaß² in cm | | | Luftporengehalt / % | Druckfestigkeit 24h / MPa |
|---|---|---|---|---|---|---|
| | | 0 min | 10 min | 30 min | | |
| Polymer 1 | 0,13 % | 62,0 | 46,5 | 33 | 2,5 % | 54,5 |
| Polymer 2 | 0,13 % | 58,5 | 40,5 | 32 | 2,5 % | 53,5 |

| | | | | | | |
|---|---|---|---|---|---|---|
| ¹ Dosierung in Gew.-% Polymerfeststoff bezogen auf die Zementeinwaage, ² Bestimmung nach DIN EN 12350-5 | | | | | | |

Aus obigen Ergebnissen wird deutlich, dass das nach dem erfindungsgemäßen Verfahren hergestellte Polymer 1 eine höhere Verflüssigungswirkung aufweist als Polymer 2 (Vergleichsbeispiel). Es ist davon auszugehen, dass eine höhere Einheitlichkeit der Polymere durch das erfindungsgemäße Verfahren erzielt werden konnte. Auch dürften Verluste durch Hydrolyse des Polyethermakromonomers geringer ausfallen.

## Patentansprüche

1. Verfahren zur Herstellung eines Copolymers in semikontinuierlicher Betriebsweise in einer Polymerisationsvorrichtung enthaltend einen mit einer Dosiereinrichtung verbundenen Polymerisationsreaktor, wobei Säuremonomer in der Dosiereinrichtung sowie Polyethermakromonomer und Wasser in dem Polymerisationsreaktor jeweils vorgelegt werden, Säuremonomer aus der Dosiereinrichtung über eine Säuremonomerdosierleitung in den Polymerisationsreaktor eindosiert wird, vor und/oder während der Eindosierung des Säuremonomers in den Polymerisationsreaktor radikalischer Polymerisationsinitiator in den Polymerisationsreaktor eingeleitet wird, so dass in dem Polymerisationsreaktor ein wässriges Medium entsteht, in welchem Säuremonomer und Polyethermakromonomer unter Bildung des Copolymers durch radikalische Polymerisation umgesetzt werden, das molare Verhältnis von insgesamt eingesetztem Säuremonomer zu insgesamt eingesetztem Polyethermakromonomer 20:1 bis 1:1 beträgt, dass molare Verhältnis von in den Polymerisationsreaktor vorgelegten Säuremonomer zu dem in den Polymerisationsreaktor eindosierten Säuremonomer 3:1 bis 1:10 beträgt, wobei während der radikalischen Polymerisation kontinuierlich eine Teilmenge des Copolymer enthaltenden wässrigen Mediums aus dem Polymerisationsreaktor über eine Reaktionsmischungsleitung ausgeleitet wird, welche über eine Mischeinrichtung mit der Säuremonomerdosierleitung verbunden ist, das ausgeleitete Copolymer enthaltende wässrige Medium in der Mischeinrichtung während der Dosierung des Säuremonomers mit dem Säuremonomer vermischt wird und nach dem Vermischen über die Säuremonomerdosierleitung in den Polymerisationsreaktor zurückgeführt wird.

2. Verfahren nach Anspruch 1, **dadurch gekennzeichnet, dass** als radikalischer Polymerisationsinitiator ein Redoxinitiatorsystem eingesetzt wird und die Temperatur des Copolymer enthaltenden wässrigen Mediums in dem Polymerisationsreaktor während der radikalischen Polymerisation 5 bis 40 °C beträgt, wobei mittels einer mit der Reaktionsmischungsleitung verbundenen Kühleinrichtung das aus dem Polymerisationsreaktor ausgeleitete Copolymer enthaltende wässrige Medium um mindestens 3 °C gekühlt wird.

3. Verfahren nach Anspruch 1 oder 2, **dadurch gekennzeichnet, dass** radikalischer Polymerisationsinitiator während der radikalischen Polymerisation in die Reaktionsmischungsleitung eingeleitet wird.

4. Verfahren nach Anspruch 2 oder 3, **dadurch gekennzeichnet, dass** die Mischeinrichtung der Kühleinrichtung nachgeschaltet ist.

5. Verfahren nach einem der Ansprüche 1 bis 4, **dadurch gekennzeichnet, dass** die Mischeinrichtung als statischer Mischer vorliegt.

6. Verfahren nach einem der Ansprüche 1 bis 5, **dadurch gekennzeichnet, dass** das Säuremonomer in Form einer wässrigen Lösung in der Dosiereinrichtung vorliegt.

7. Verfahren nach einem der Ansprüche 1 bis 6, **dadurch gekennzeichnet, dass** in dem Polymerisationsreaktor das Copolymer enthaltende wässrige Medium mit darüber befindlichem Gas eine Grenzfläche ausbildet, wobei das Säuremonomer oberhalb dieser Grenzfläche in den Polymerisationsreaktor eindosiert wird.

8. Verfahren nach einem der Ansprüche 1 bis 7, **dadurch gekennzeichnet, dass** durch die Umsetzung des Säuremonomers eine Struktureinheit im Copolymer erzeugt wird, die gemäß einer der allgemeinen Formeln (Ia), (Ib), (Ic) und/oder (Id) ist 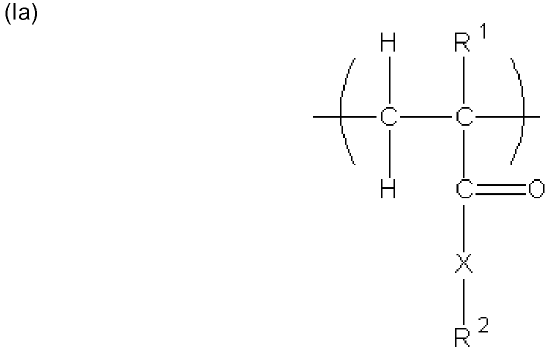 mit
R¹ gleich oder verschieden sowie repräsentiert durch H und/oder eine unverzweigte oder verzweigte C₁ - C₄ Alkylgruppe;
X gleich oder verschieden sowie repräsentiert durch NH-(CₙH₂ₙ) mit n = 1, 2, 3 oder 4 und/oder O-(CₙH₂ₙ) mit n = 1, 2, 3 oder 4 und/oder durch eine nicht vorhandene Einheit;
R² gleich oder verschieden sowie repräsentiert durch OH, SO₃H, PO₃H₂, O-PO₃H₂ und/oder para substituiertes C₆H₄-SO₃H, mit der Maßgabe, dass falls X eine nicht vorhandene Einheit ist, R² durch OH repräsentiert wird; 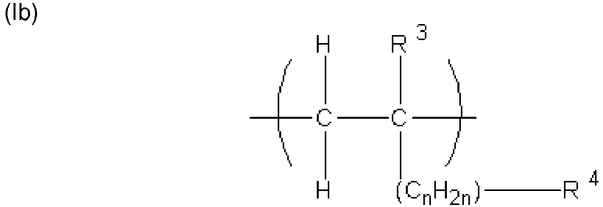
mit
R³ gleich oder verschieden sowie repräsentiert durch H und/oder eine unverzweigte oder verzweigte C₁ - C₄ Alkylgruppe;
n = 0, 1, 2, 3 oder 4
R⁴ gleich oder verschieden sowie repräsentiert durch SO₃H, PO₃H₂, O-PO₃H₂ und/oder para substituiert vorliegendes C₆H₄-SO₃H; 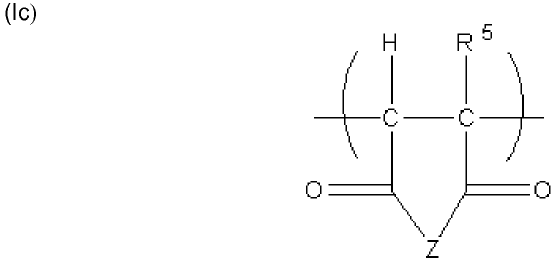
mit
R⁵ gleich oder verschieden sowie repräsentiert durch H und/oder eine unverzweigte oder verzweigte C₁ - C₄ Alkylgruppe;
Z gleich oder verschieden sowie repräsentiert durch O und/oder NH; 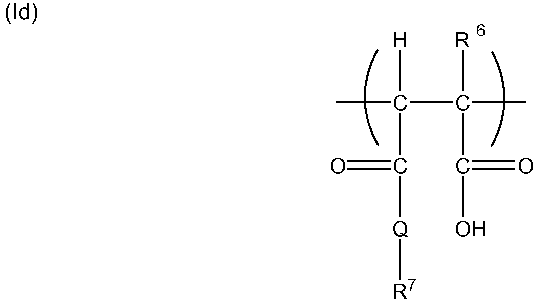
mit
R⁶ gleich oder verschieden sowie repräsentiert durch H und/oder eine unverzweigte oder verzweigte C₁ - C₄ Alkylgruppe;
Q gleich oder verschieden sowie repräsentiert durch NH und/oder O;
R⁷ gleich oder verschieden sowie repräsentiert durch H, (CₙH₂ₙ)-SO₃H mit n = 0, 1, 2, 3 oder 4, (CₙH₂ₙ)-OH mit n = 0, 1, 2, 3 oder 4; (CₙH₂ₙ)-PO₃H₂ mit n = 0, 1, 2, 3 oder 4, (CₙH₂ₙ)-OPO₃H₂ mit n= 0, 1, 2, 3 oder 4, (C₆H₄)-SO₃H, (C₆H₄)-PO₃H₂, (C₆H₄)-OPO₃H₂ und/oder (CₘH₂ₘ)ₑ-O-(A'O)_{α} -R⁹ mit m = 0, 1, 2, 3 oder 4, e = 0, 1, 2, 3 oder 4, A' = C_{x'}H_{2x'} mit x' = 2, 3, 4 oder 5 und/oder CH₂C(C₆H₅)H-, α = eine ganze Zahl von 1 bis 350 mit R⁹ gleich oder verschieden sowie repräsentiert durch eine unverzweigte oder verzweigte C₁ - C₄ Alkylgruppe.

9. Verfahren nach einem der Ansprüche 1 bis 8, **dadurch gekennzeichnet, dass** als Säuremonomer Methacrylsäure, Acrylsäure, Maleinsäure, Maleinsäureanhydrid, ein Halbester der Maleinsäure oder eine Mischung aus mehreren dieser Komponenten eingesetzt wird.

10. Verfahren nach einem der Ansprüche 1 bis 9, **dadurch gekennzeichnet, dass** durch die Umsetzung des Polyethermakromonomers eine Struktureinheit im Copolymer erzeugt wird, die gemäß einer der allgemeinen Formeln (IIa), (IIb) und/oder (IIc) ist 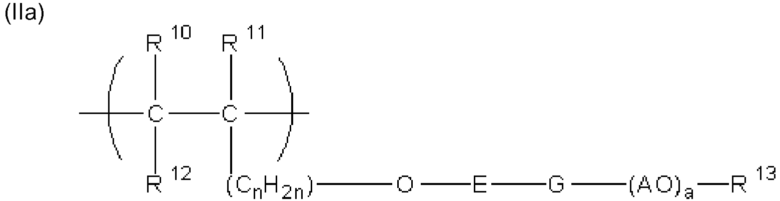 mit
R¹⁰, R¹¹ sowie R¹² jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder eine nicht vorhandene Einheit;
G gleich oder verschieden sowie repräsentiert durch O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 (bevorzugt x = 2) und/oder CH₂CH(C₆H₅);
n gleich oder verschieden sowie repräsentiert durch 0, 1, 2, 3, 4 und/oder 5;
a gleich oder verschieden sowie repräsentiert durch eine ganze Zahl von 2 bis 350 (bevorzugt 10 - 200);
R¹³ gleich oder verschieden sowie repräsentiert durch H, eine unverzweigte oder verzweigte C₁ - C₄ Alkylgruppe, CO-NH₂, und/oder COCH₃; 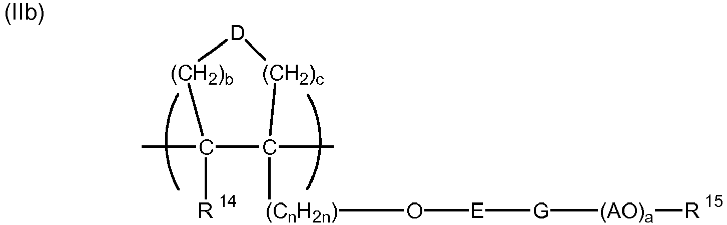
mit
R¹⁴ gleich oder verschieden sowie repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀, ortho, meta oder para substituiert vorliegendes C₆H₄ und/oder durch eine nichtvorhandene Einheit;
G gleich oder verschieden sowie repräsentiert durch eine nicht vorhandene Einheit, O, NH und/oder CO-NH mit der Maßgabe, dass falls E eine nicht vorhandene Einheit ist, G auch als eine nicht vorhandene Einheit vorliegt;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5
a gleich oder verschieden sowie repräsentiert durch eine ganze Zahl von 2 bis 350;
D gleich oder verschieden sowie repräsentiert durch eine nicht vorhandene Einheit, NH und/oder O, mit der Maßgabe, dass falls D eine nicht vorhandene Einheit ist: b = 0, 1, 2, 3 oder 4 sowie c = 0, 1, 2, 3 oder 4, wobei b + c = 3 oder 4, und mit der Maßgabe dass wenn D NH und/oder O ist: b = 0, 1, 2 oder 3, c = 0, 1, 2 oder 3, wobei b + c = 2 oder 3;
R¹⁵ gleich oder verschieden sowie repräsentiert durch H, eine unverzweigte oder verzweigte C₁ - C₄ Alkylgruppe, CO-NH₂, und/oder COCH₃; 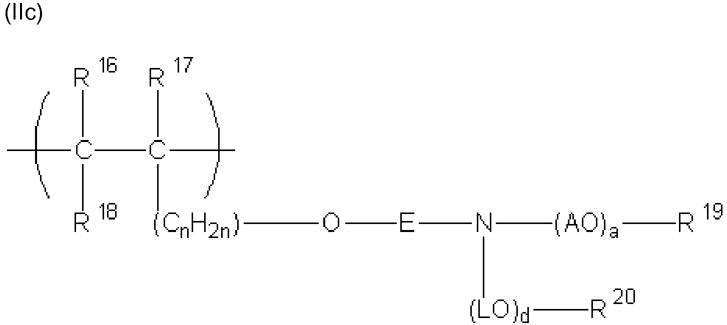
mit
R¹⁶, R¹⁷ sowie R¹⁸ jeweils gleich oder verschieden und unabhängig voneinander repräsentiert durch H und/oder eine unverzweigte oder verzweigte C₁ - C₄ Alkylgruppe;
E gleich oder verschieden sowie repräsentiert durch eine unverzweigte oder verzweigte C₁ - C₆ Alkylengruppe, eine Cyclohexylgruppe, CH₂-C₆H₁₀ und/oder ortho, meta oder para substituiert vorliegendes C₆H₄;
A gleich oder verschieden sowie repräsentiert durch CₓH₂ₓ mit x = 2, 3, 4 und/oder 5 und/oder CH₂CH(C₆H₅);
n gleich oder verschieden sowie repräsentiert durch 0, 1, 2, 3, 4 und/oder 5;
L gleich oder verschieden sowie repräsentiert durch CₓH₂ₓ mit x = 2, 3, 4 und/oder 5 und/oder CH₂-CH(C₆H₅);
a gleich oder verschieden sowie repräsentiert durch eine ganze Zahl von 2 bis 350;
d gleich oder verschieden sowie repräsentiert durch eine ganze Zahl von 1 bis 350;
R¹⁹ gleich oder verschieden sowie repräsentiert durch H und/oder eine unverzweigte oder verzweigte C₁ - C₄ Alkylgruppe,
R²⁰ gleich oder verschieden sowie repräsentiert durch H und/oder eine unverzweigte C₁ - C₄ Alkylgruppe.

11. Verfahren nach einem der Ansprüche 1 bis 10, **dadurch gekennzeichnet, dass** als Polyethermakromonomer alkoxyliertes Isoprenol und/oder alkoxylierter Hydroxybutylvinylether und/oder alkoxylierter (Meth)allylalkohol und/oder vinyliertes Methylpolyalkylenglykol mit bevorzugt jeweils einer arithmetisch mittleren Zahl an Oxyalkylengruppen von 4 bis 340 eingesetzt wird.

12. Verfahren nach einem der Ansprüche 1 bis 11, **dadurch gekennzeichnet, dass** als radikalischer Polymerisationsinitiator ein Redoxinitiatorsystem eingesetzt wird, welches H₂O₂, FeSO₄ sowie ein Reduktionsmittel enthält.

13. Verfahren nach einem der Ansprüche 1 bis 12, **dadurch gekennzeichnet, dass** das wässrige Medium in Form einer wässrigen Lösung vorliegt.

14. Verfahren nach einem der Ansprüche 1 bis 13, **dadurch gekennzeichnet, dass** insgesamt mindestens 45 Mol-%, bevorzugt mindestens 80 Mol-% aller Struktureinheiten des Copolymers als einpolymerisiertes Säuremonomer und einpolymerisiertes Polyethermakromonomer vorliegen.

15. Verfahren nach einem der Ansprüche 1 bis 14, **dadurch gekennzeichnet, dass** ein Kettenregler, welcher bevorzugt in gelöster Form vorliegt, in den Polymerisationsreaktor eingeleitet wird.

16. Copolymer herstellbar gemäß dem Verfahren nach einem der Ansprüche 1 bis 15.

17. Verwendung eines Copolymers gemäß Anspruch 16 als Dispergiermittel für hydraulische Bindemittel oder für latenthydraulische Bindemittel.

## Claims

1. Process for the preparation of a copolymer in semicontinuous operation in a polymerization apparatus, comprising a polymerization reactor connected to a metering device, in each case acid monomer being initially taken in the metering device and polyether macromonomer and water in the polymerization reactor, acid monomer being metered from the metering device via an acid metering line into the polymerization reactor, free radical polymerization initiator being passed into the polymerization reactor before and/or during the metering of the acid monomer into the polymerization reactor so that an aqueous medium in which acid monomer and polyether macromonomer are reacted with formation of the copolymer by free radical polymerization forms in the polymerization reactor, the molar ratio of acid monomer used altogether to polyether macromonomer used altogether being 20 : 1 to 1 : 1, the molar ratio of acid monomer initially taken in the polymerization reactor to the acid monomer metered into the polymerization reactor being 3 : 1 to 1 : 10, a portion of the copolymer-containing aqueous medium being passed continuously during the free radical polymerization from the polymerization reactor via a reaction mixture line which is connected via a mixing device to the acid monomer metering line, the discharged copolymer-containing aqueous medium being mixed with the acid monomer in the mixing device during the metering of the acid monomer and being recycled to the polymerization reactor after the mixing via the acid monomer metering line.

2. Process according to Claim 1, **characterized in that** the free radical polymerization initiator used is a redox initiator system and the temperature of the copolymer-containing aqueous medium in the polymerization reactor during the free radical polymerization is 5 to 40°C, the copolymer-containing aqueous medium discharged from the polymerization reactor being cooled by at least 3°C by means of a cooling device connected to the reaction mixture line.

3. Process according to Claim 1 or 2, **characterized in that** free radical polymerization initiator is passed into the reaction mixture line during the free radical polymerization.

4. Process according to Claim 2 or 3, **characterized in that** the mixing device is downstream of the cooling device.

5. Process according to any of Claims 1 to 4, **characterized in that** the mixing device is present as a static mixer.

6. Process according to any of Claims 1 to 5, **characterized in that** the acid monomer is present in the form of an aqueous solution in the metering device.

7. Process according to any of Claims 1 to 6, **characterized in that** the copolymer-containing aqueous medium forms an interface with gas present above in the polymerization reactor, the acid monomer being metered into the polymerization reactor above this interface.

8. Process according to any of Claims 1 to 7, **characterized in that** a structural unit is produced in the copolymer by the reaction of the acid monomer, which structural unit is according to one of the general formulae (Ia), (Ib), (Ic) and/or (Id) 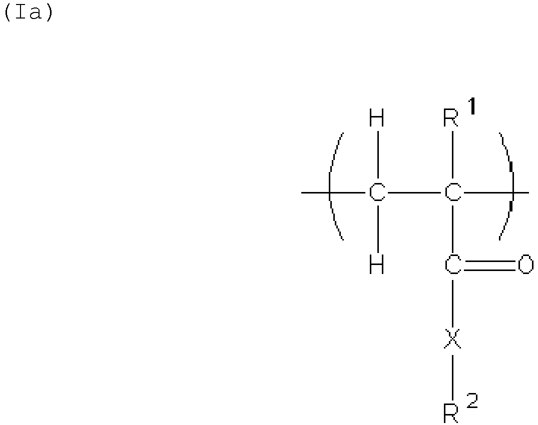 where
R¹ is identical or different and is represented by H and/or a straight-chain or branched C₁ - C₄ alkyl group;
X is identical or different and is represented by NH-(CₙH₂ₙ) where n = 1, 2, 3 or 4 and/or O- (CₙH₂ₙ) where n = 1, 2, 3 or 4 and/or by a unit not present;
R² is identical or different and is represented by OH, SO₃H, PO₃H₂, O-PO₃H₂ and/or para-substituted C₆H₄-SO₃H, with the proviso that, if X is a unit not present, R² is represented by OH; 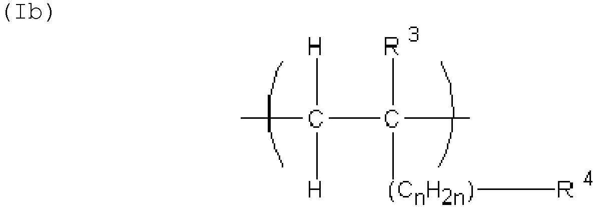
where
R³ is identical or different and is represented by H and/or a straight-chain or branched C₁ - C₄ alkyl group;
n = 0, 1, 2, 3 or 4;
R⁴ is identical or different and is represented by SO₃H, PO₃H₂, O-PO₃H₂ and/or C₆H₄-SO₃H present in para-substituted form; 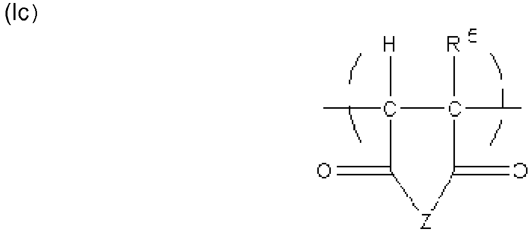
where
R⁵ is identical or different and is represented by H and/or a straight-chain or branched C₁ - C₄ alkyl group;
Z is identical or different and is represented by O and/or NH; 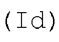 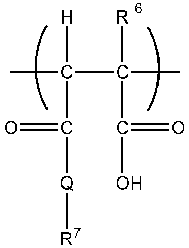
where
R⁶ is identical or different and is represented by H and/or a straight-chain or branched C₁ - C₄ alkyl group;
Q is identical or different and is represented by NH and/or O;
R⁷ is identical or different and is represented by H, (CₙH₂ₙ)-SO₃H where n = 0, 1, 2, 3 or 4, (CₙH₂ₙ)-OH where n = 0, 1, 2, 3 or 4; (CₙH₂ₙ)-PO₃H₂ where n = 0, 1, 2, 3 or 4, (CₙH₂ₙ)-OPO₃H₂ where n= 0, 1, 2, 3 or 4, (C₆H₄)-SO₃H, (C₆H₄)-PO₃H₂, (C₆H₄)-OPO₃H₂ and/or (CₘH₂ₘ)ₑ-O-(A'O)_{α}-R⁹ where m = 0, 1, 2, 3 or 4, e = 0, 1, 2, 3 or 4, A' = Cₓ,H₂ₓ, where x' = 2, 3, 4 or 5 and/or CH₂C(C₆H₅)H-, α = an integer from 1 to 350 with R⁹ identical or different and represented by a straight-chain or branched C₁ - C₄ alkyl group.

9. Process according to any of Claims 1 to 8, **characterized in that** the acid monomer used is methacrylic acid, acrylic acid, maleic acid, maleic anhydride, a monoester of maleic acid or a mixture of a plurality of these components.

10. Process according to any of Claims 1 to 9, **characterized in that** a structural unit is produced in the copolymer by the reaction of the polyether macromonomer, which structural unit is according to one of the general formulae (IIa), (IIb) and/or (IIc) 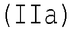 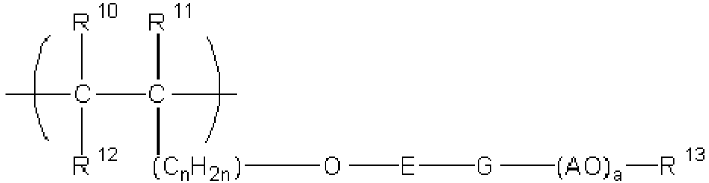 where
R¹⁰, R¹¹ and R¹² are in each case identical or different and, independently of one another, are represented by H and/or a straight-chain or branched C₁ - C₄ alkyl group;
E is identical or different and is represented by a straight-chain or branched C₁ - C₆ alkylene group, a cyclohexyl group, CH₂-C₆H₁₀, C₆H₄ present in ortho-, meta- or para-substituted form and/or a unit not present;
G is identical or different and is represented by O, NH and/or CO-NH, with the proviso that, if E is a unit not present, G is also present as a unit not present;
A is identical or different and is represented by CₓH₂ₓ where x = 2, 3, 4 and/or 5 (preferably x = 2) and/or CH₂CH(C₆H₅);
n is identical or different and is represented by 0, 1, 2, 3, 4 and/or 5;
a is identical or different and is represented by an integer from 2 to 350 (preferably 10 - 200);
R¹³ is identical or different and is represented by H, a straight-chain or branched C₁ - C₄ alkyl group, CO-NH₂, and/or COCH₃; 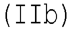 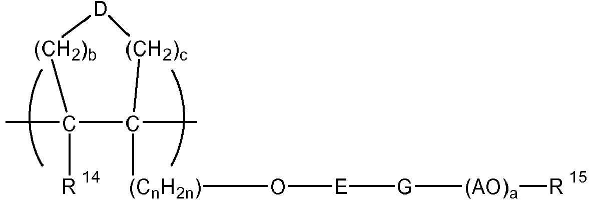
where
R¹⁴ is identical or different and is represented by H and/or a straight-chain or branched C₁ - C₄ alkyl group;
E is identical or different and is represented by a straight-chain or branched C₁ - C₆ alkylene group, a cyclohexyl group, CH₂-C₆H₁₀, C₆H₄ present in ortho-, meta- or para-substituted form and/or by a unit not present;
G is identical or different and is represented by a unit not present, O, NH and/or CO-NH, with the proviso that, if E is a unit not present, G is also present as a unit not present;
A is identical or different and is represented by CₓH₂ₓ where x = 2, 3, 4 and/or 5 and/or CH₂CH(C₆H₅);
n is identical or different and is represented by 0, 1, 2, 3, 4 and/or 5;
a is identical or different and is represented by an integer from 2 to 350;
D is identical or different and is represented by a unit not present, NH and/or O, with the proviso that if D is a unit not present: b = 0, 1, 2, 3 or 4 and c = 0, 1, 2, 3 or 4, where b + c = 3 or 4, and with the proviso that if D is NH and/or O: b = 0, 1, 2 or 3, c = 0, 1, 2 or 3, where b + c = 2 or 3;
R¹⁵ is identical or different and is represented by H, a straight-chain or branched C₁ - C₄ alkyl group, CO-NH₂, and/or COCH₃; 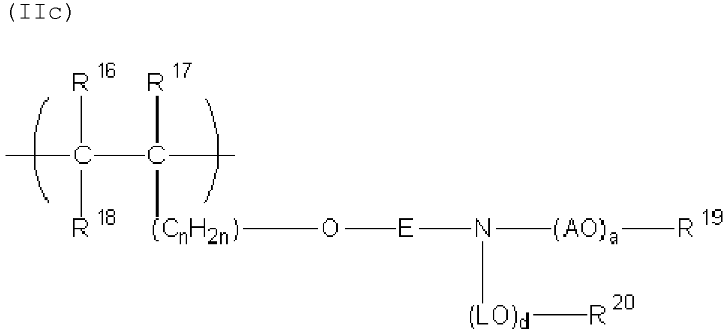
where
R¹⁶, R¹⁷ and R¹⁸ in each case are identical or different and, independently of one another, are represented by H and/or a straight-chain or branched C₁ - C₄ alkyl group;
E is identical or different and is represented by a straight-chain or branched C₁ - C₆ alkylene group, a cyclohexyl group, CH₂-C₆H₁₀ and/or C₆H₄ present in ortho-, meta- or para-substituted form;
A is identical or different and is represented by CₓH₂ₓ where x = 2, 3, 4 and/or 5 and/or CH₂CH(C₆H₅);
n is identical or different and is represented by 0, 1, 2, 3, 4 and/or 5;
L is identical or different and is represented by CₓH₂ₓ where x = 2, 3, 4 and/or 5 and/or CH₂-CH(C₆H₅);
a is identical or different and is represented by an integer from 2 to 350;
d is identical or different and is represented by an integer from 1 to 350;
R¹⁹ is identical or different and is represented by H and/or a straight-chain or branched C₁ - C₄ alkyl group,
R²⁰ is identical or different and is represented by H and/or a straight-chain C₁ - C₄ alkyl group.

11. Process according to any of Claims 1 to 10, **characterized in that** the polyether macromonomer used is alkoxylated isoprenol and/or alkoxylated hydroxybutyl vinyl ether and/or alkoxylated (meth)allyl alcohol and/or vinylated methylpolyalkylene glycol having preferably in each case an arithmetic mean number of 4 to 340 oxyalkylene groups.

12. Process according to any of Claims 1 to 11, **characterized in that** the free radical polymerization initiator used is a redox initiator system which contains H₂O₂, FeSO₄ and a reducing agent.

13. Process according to any of Claims 1 to 12, **characterized in that** the aqueous medium is present in the form of an aqueous solution.

14. Process according to any of Claims 1 to 13, **characterized in that** altogether at least 45 mol%, preferably at least 80 mol%, of all structural units of the copolymer are present as acid monomer incorporated in the form of polymerized units and polyether macromonomer incorporated in the form of polymerized units.

15. Process according to any of Claims 1 to 14, **characterized in that** a chain-transfer agent, which is preferably present in dissolved form, is passed into the polymerization reactor.

16. Copolymer which can be prepared by the process according to any of Claims 1 to 15.

17. Use of a copolymer according to Claim 16 as a dispersant for hydraulic binders or for latently hydraulic binders.

## Revendications

1. Procédé de fabrication d'un copolymère en mode semi-continu dans un dispositif de polymérisation contenant un réacteur de polymérisation relié à un dispositif d'alimentation, un monomère acide étant chargé initialement dans le dispositif d'alimentation, et un macromonomère de polyéther et de l'eau étant chargés initialement dans le réacteur de polymérisation, le monomère acide du dispositif d'alimentation étant introduit dans le réacteur de polymérisation au moyen d'une conduite de dosage de monomère acide, un initiateur de polymérisation radicalaire étant introduit dans le réacteur de polymérisation avant et/ou pendant l'introduction du monomère acide dans le réacteur de polymérisation, de manière à ce qu'un milieu aqueux se forme dans le réacteur de polymérisation, dans lequel le monomère acide et le macromonomère de polyéther réagissent par polymérisation radicalaire pour former le copolymère, le rapport molaire entre le monomère acide utilisé au total et le macromonomère de polyéther utilisé au total étant de 20:1 à 1:1, le rapport molaire entre le monomère acide chargé initialement dans le réacteur de polymérisation et le monomère acide introduit dans le réacteur de polymérisation étant de 3:1 à 1:10, une quantité partielle du milieu aqueux contenant le copolymère étant évacuée pendant la polymérisation radicalaire en continu hors du réacteur de polymérisation par le biais d'une conduite de mélange réactionnel qui est connectée par le biais d'un dispositif de mélange à la conduite de dosage de monomère acide, le milieu aqueux contenant le copolymère évacué étant mélangé au monomère acide pendant le dosage du monomère acide et après le mélange étant ramené dans le réacteur de polymérisation par le biais de la conduite de dosage de monomère acide.

2. Procédé selon la revendication 1, **caractérisé en ce que** l'on utilise en tant qu'initiateur de polymérisation radicalaire un système initiateur redox et la température du milieu aqueux contenant le copolymère dans le réacteur de polymérisation pendant la polymérisation radicalaire étant de 5 à 40°C, le milieu aqueux contenant le copolymère évacué hors du réacteur de polymérisation étant refroidi d'au moins 3°C au moyen d'un dispositif de refroidissement connecté à la conduite de mélange réactionnel.

3. Procédé selon la revendication 1 ou 2, **caractérisé en ce que** l'initiateur de polymérisation radicalaire est introduit dans la conduite de mélange réactionnel pendant la polymérisation radicalaire.

4. Procédé selon la revendication 2 ou 3, **caractérisé en ce que** le dispositif de mélange est monté en aval du dispositif de refroidissement.

5. Procédé selon l'une quelconque des revendications 1 à 4, **caractérisé en ce que** le dispositif de mélange se présente sous forme de mélangeur statique.

6. Procédé selon l'une quelconque des revendications 1 à 5, **caractérisé en ce que** le monomère acide se présente sous forme de solution aqueuse dans le dispositif de dosage.

7. Procédé selon l'une quelconque des revendications 1 à 6, **caractérisé en ce que** dans le réacteur de polymérisation, le milieu aqueux contenant le copolymère constitue avec le gaz se trouvant au-dessus de lui une surface limite, le monomère acide étant ajouté par dosage au-dessus de cette surface limite dans le réacteur de polymérisation.

8. Procédé selon l'une quelconque des revendications 1 à 7, **caractérisé en ce que** la réaction du monomère acide forme une unité structurale dans le copolymère qui est selon une des formules générales (Ia), (Ib), (Ic) et/ou (Id) 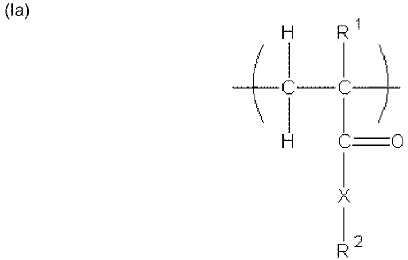 avec
R¹ identiques ou différents et représentés par H et/ou un groupe alkyle en C₁-C₄ non ramifié ou ramifié ;
X identiques ou différents et représentés par NH-(CₙH₂ₙ) avec n = 1, 2, 3 ou 4 et/ou O- (CₙH₂ₙ) avec n = 1, 2, 3 ou 4 et/ou par une unité inexistante ;
R² identiques ou différents et représentés par OH, SO₃H, PO₃H₂, O-PO₃H₂ et/ou C₆H₄-SO₃H para-substitué, à condition que si X est une unité inexistante, R² soit représenté par OH ; 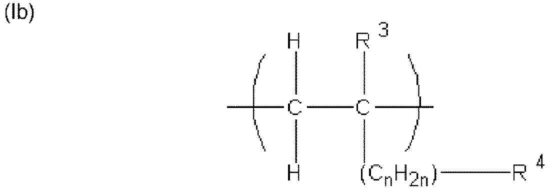
avec
R³ identiques ou différents et représentés par H et/ou un groupe alkyle en C₁-C₄ non ramifié ou ramifié ;
n = 0, 1, 2, 3 ou 4 ;
R⁴ identiques ou différents et représentés par SO₃H, PO₃H₂, O-PO₃H₂ et/ou C₆H₄-SO₃H para-substitué ; 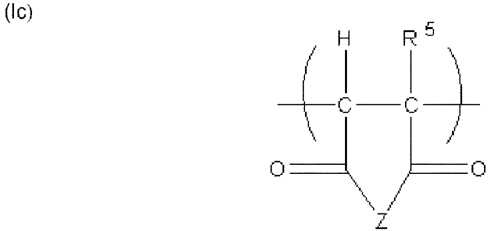
avec
R⁵ identiques ou différents et représentés par H et/ou un groupe alkyle en C₁-C₄ non ramifié ou ramifié ;
Z identiques ou différents et représentés par O et/ou NH ; 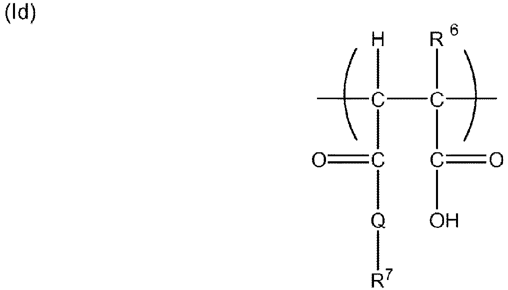
avec
R⁶ identiques ou différents et représentés par H et/ou un groupe alkyle en C₁-C₄ non ramifié ou ramifié ;
Q identiques ou différents et représentés par NH et/ou O ;
R⁷ identiques ou différents et représentés par H, (CₙH₂ₙ)-SO₃H avec n = 0, 1, 2, 3 ou 4, (CₙH₂ₙ)-OH avec n = 0, 1, 2, 3 ou 4 ; (CₙH₂ₙ)-PO₃H₂ avec n = 0, 1, 2, 3 ou 4, (CₙH₂ₙ)-OPO₃H₂ avec n = 0, 1, 2, 3 ou 4, (C₆H₄)-SO₃H, (C₆H₄)-PO₃H₂, (C₆H₄)-OPO₃H₂ et/ou (CₘH₂ₘ)ₑ-O-(A'O)_{α}-R⁹ avec m = 0, 1, 2, 3 ou 4, e = 0, 1, 2, 3 ou 4, A' = C_{x'}H_{2x'} avec x' = 2, 3, 4 ou 5 et/ou CH₂C(C₆H₅)H-, α = un nombre entier de 1 à 350 avec R⁹ identiques ou différents et représentés par un groupe alkyle en C₁-C₄ non ramifié ou ramifié.

9. Procédé selon l'une quelconque des revendications 1 à 8, **caractérisé en ce que** l'acide méthacrylique, l'acide acrylique, l'acide maléique, l'anhydride de l'acide maléique, un semi-ester de l'acide maléique ou un mélange de plusieurs de ces composants est utilisé en tant que monomère acide.

10. Procédé selon l'une quelconque des revendications 1 à 9, **caractérisé en ce que** la réaction du macromonomère de polyéther forme une unité structurale dans le copolymère, qui est selon une des formules générales (IIa), (IIb) et/ou (IIc) 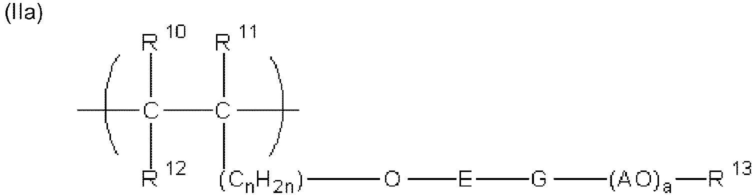 avec
R¹⁰, R¹¹ et R¹² chacun identiques ou différents et représentés indépendamment les uns des autres par H et/ou un groupe alkyle en C₁-C₄ non ramifié ou ramifié ; E identiques ou différents et représentés par un groupe alkylène en C₁-C₆ non ramifié ou ramifié, un groupe cyclohexyle, CH₂-C₆H₁₀, C₆H₄ ortho-, méta- ou para-substitué et/ou une unité inexistante ;
G identiques ou différents et représentés par O, NH et/ou CO-NH, à condition que si E est une unité inexistante, G se présente également sous la forme d'une unité inexistante ;
A identiques ou différents et représentés par CₓH₂ₓ avec x = 2, 3, 4 et/ou 5 (de préférence x = 2) et/ou CH₂CH(C₆H₅) ;
n identiques ou différents et représentés par 0, 1, 2, 3, 4 et/ou 5 ;
a identiques ou différents et représentés par un nombre entier de 2 à 350 (de préférence 10 à 200) ;
R¹³ identiques ou différents et représentés par H, un groupe alkyle en C₁-C₄ non ramifié ou ramifié, CO-NH₂ et/ou COCH₃ ; 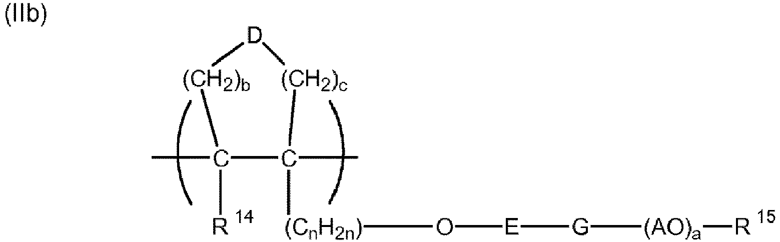
avec
R¹⁴ identiques ou différents et représentés par H et/ou un groupe alkyle en C₁-C₄ non ramifié ou ramifié ;
E identiques ou différents et représentés par un groupe alkylène en C₁-C₆ non ramifié ou ramifié, un groupe cyclohexyle, CH₂-C₆H₁₀, C₆H₄ ortho-, méta- ou para-substitué et/ou par une unité inexistante ;
G identiques ou différents et représentés par une unité inexistante, O, NH et/ou CO-NH, à condition que si E est une unité inexistante, G se présente également sous la forme d'une unité inexistante ;
A identiques ou différents et représentés par CₓH₂ₓ avec x = 2, 3, 4 et/ou 5 et/ou CH₂CH(C₆H₅) ;
n identiques ou différents et représentés par 0, 1, 2, 3, 4 et/ou 5 ;
a identiques ou différents et représentés par un nombre entier de 2 à 350 ;
D identiques ou différents et représentés par une unité inexistante, NH et/ou O, à condition que si D est une unité inexistante : b = 0, 1, 2, 3 ou 4 et c = 0, 1, 2, 3 ou 4, avec b + c = 3 ou 4, et à condition que lorsque D est NH et/ou O : b = 0, 1, 2 ou 3, c = 0, 1, 2 ou 3, avec b + c = 2 ou 3 ;
R¹⁵ identiques ou différents et représentés par H, un groupe alkyle en C₁-C₄ non ramifié ou ramifié, CO-NH₂ et/ou COCH₃ ; 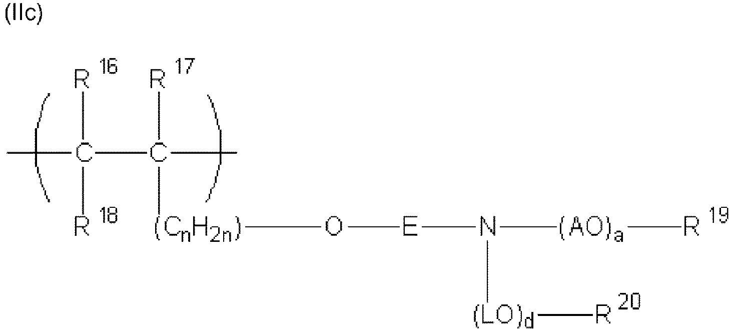
avec
R¹⁶, R¹⁷ et R¹⁸ chacun identiques ou différents et représentés indépendamment les uns des autres par H et/ou un groupe alkyle en C₁-C₄ non ramifié ou ramifié ; E identiques ou différents et représentés par un groupe alkylène en C₁-C₆ non ramifié ou ramifié, un groupe cyclohexyle, CH₂-C₆H₁₀ et/ou C₆H₄ ortho-, méta- ou para-substitué ;
A identiques ou différents et représentés par CₓH₂ₓ avec x = 2, 3, 4 et/ou 5 et/ou CH₂CH(C₆H₅) ;
n identiques ou différents et représentés par 0, 1, 2, 3, 4 et/ou 5 ;
L identiques ou différents et représentés par CₓH₂ₓ avec x = 2, 3, 4 et/ou 5 et/ou CH₂-CH(C₆H₅) ;
a identiques ou différents et représentés par un nombre entier de 2 à 350 ;
d identiques ou différents et représentés par un nombre entier de 1 à 350 ;
R¹⁹ identiques ou différents et représentés par H et/ou un groupe alkyle en C₁-C₄ non ramifié ou ramifié ;
R²⁰ identiques ou différents et représentés par H et/ou un groupe alkyle en C₁-C₄ non ramifié.

11. Procédé selon l'une quelconque des revendications 1 à 10, **caractérisé en ce qu'**un isoprénol alcoxylé et/ou un éther d'hydroxybutylvinyle acoxylé et/ou un alcool (méth)allylique alcoxylé et/ou un méthylpolyalkylène glycol vinylé contenant de préférence chacun un nombre arithmétiquement moyen de groupes oxyalkylène de 4 à 340 est utilisé en tant que macromonomère de polyéther.

12. Procédé selon l'une quelconque des revendications 1 à 11, **caractérisé en ce qu'**un système initiateur redox qui contient H₂O₂, FeSO₄ ainsi qu'un agent réducteur est utilisé en tant qu'initiateur de polymérisation radicalaire.

13. Procédé selon l'une quelconque des revendications 1 à 12, **caractérisé en ce que** le milieu aqueux se présente sous la forme d'une solution aqueuse.

14. Procédé selon l'une quelconque des revendications 1 à 13, **caractérisé en ce qu'**au total au moins 45 % en moles, de préférence au moins 80 % en moles, de toutes les unités structurales du copolymère sont présentes en tant que monomère acide polymérisé et macromonomère de polyéther polymérisé.

15. Procédé selon l'une quelconque des revendications 1 à 14, **caractérisé en ce qu'**un régulateur de chaînes, qui se présente de préférence sous forme dissoute, est introduit dans le réacteur de polymérisation.

16. Copolymère pouvant être fabriqué selon le procédé selon l'une quelconque des revendications 1 à 15.

17. Utilisation d'un copolymère selon la revendication 16 en tant qu'agent dispersant pour des liants hydrauliques ou pour des liants à latence hydraulique.
